# EUROPÄISCHE PATENTSCHRIFT

(11) **EP 3 071 471 B1**
(45) Veröffentlichungstag und Bekanntmachung des Hinweises auf die Patenterteilung: **23.08.2017**
(21) Anmeldenummer: 14766494.0
(22) Anmeldetag: 17.09.2014
(51) Int. Cl.: B62D 5/04

(54) **LENKSYSTEM**
STEERING SYSTEM
SYSTÈME DE DIRECTION

(30) Priorität: 21.11.2013 DE 102013112841
(43) Veröffentlichungstag der Anmeldung: 28.09.2016
(73) Patentinhaber: Robert Bosch Automotive Steering GmbH, 73527 Schwäbisch Gmünd (DE)
(72) Erfinder: NOLL, Stephen, 73563 Mögglingen (DE); SCHUBERT, Frederik, 73529 Schwäbisch Gmünd (DE); NEUFELD, Albert, 73529 Schwäbisch Gmünd (DE)
(86) Internationale Anmeldenummer: PCT/EP2014/069765
(87) Internationale Veröffentlichungsnummer: WO 2015/074782

(56) Entgegenhaltungen:
- DE-A1-102007 002 684

## Beschreibung

Die Erfindung betrifft ein Lenksystem für ein Kraftfahrzeug.

Bei den meisten Kraftfahrzeugen werden (Hilfskraft-)Lenksysteme verbaut, die beim Lenken ein unterstützendes Drehmoment erzeugen und dadurch das von dem Fahrer auf die Lenksäule aufzubringende Lenkmoment reduzieren.

Bekannte Lenksysteme umfassen ein Getriebe, das die Antriebsleistung eines hydraulischen oder elektrischen Antriebs untersetzt und beispielsweise auf die Lenksäule oder eine Zahnstange des Lenksystems überträgt. Derartige Getriebe können beispielsweise in Form eines Schraubwälzgetriebes und insbesondere als Schraubradgetriebe oder Schneckengetriebe ausgebildet sein.

Die DE 10 2007 002684 A1 zeigt den Oberbegriff des unabhängigen Anspruchs und offenbart damit ein Lenksystem für ein Kraftfahrzeug mit einem Lenkgestänge, einem Lenkantrieb, einem eine Antriebsbewegung des Lenkantriebs übertragenden Getriebe und einem das Lenkgestänge, den Lenkantrieb und/oder Getriebe zumindest teilweise umgebenden mehrteiligen Gehäuse.

Aus der DE 102011001 217 A1 ist ein Lenksystem bekannt, das einen elektrischen Lenkantrieb umfasst, dessen Drehbewegung über ein Getriebe auf ein Lenkgestänge übertragen wird. Die in Abhängigkeit von der Drehbewegung des Lenkantriebs erfolgende Translation des Lenkgestänges führt durch eine entsprechende Anbindung der beidseitigen Enden des Lenkgestänges an die lenkbaren Räder des Kraftfahrzeugs zu deren gewünschter Lenkbewegung. Das Lenksystem umfasst weiterhin ein mehrteiliges Gehäuse, dessen Gehäuseteile sowohl das Lenkgestänge, das Getriebe sowie den Lenkantrieb umgeben. Dabei sind der Antriebsgehäuseteil sowie der Getriebegehäuseteil über Schraubenverbindungen miteinander verbunden. In dem Kontaktbereich zwischen diesen beiden Gehäuseteilen ist ein Dichtelement angeordnet. Dadurch soll ein Eindringen von Feuchtigkeit und Staub aus der Umgebung in das Gehäuse über den Kontaktbereich vermieden werden. In dem in der DE 102011001 217 A1 offenbarten Lenksystem ist das Dichtelement als radial wirkender Dichtring ausgebildet, der in einer Radialnut, die in eine Mantelfläche eines Verbindungshalses eingebracht wurde, angeordnet ist.

Es hat sich gezeigt, dass eine derartige Abdichtung von zwei Gehäuseteilen eines Gehäuses eines Lenksystems in einer hochkorrosiven Umgebung, wie sie durch den Einsatz von Winterstreusalz gegeben sein kann, nicht immer ausreichend ist.

Ausgehend von diesem Stand der Technik lag der Erfindung die Aufgabe zugrunde, ein Lenksystem für ein Kraftfahrzeug anzugeben, das in konstruktiv möglichst einfacher Weise gut gegenüber der Umgebung abgedichtet ist.

Diese Aufgabe wird durch ein Lenksystem gemäß dem Patentanspruch 1 gelöst. Verfahren zur Herstellung eines solchen Lenksystems sind Gegenstände der Patentansprüche 7 und 8. Ein Kraftfahrzeug mit einem solchen Lenksystem ist Gegenstand des Patentanspruchs 9. Vorteilhafte Ausführungsformen des Lenksystems sind Gegenstand der weiteren Patentansprüche und ergeben sich aus der nachfolgenden Beschreibung der Erfindung.

Der Erfindung liegt der Gedanke zugrunde, eine Abdichtung eines Kontaktbereichs zwischen zwei Gehäuseteilen eines Gehäuses eines Lenksystems dadurch zu verbessern, dass die Menge der in den Kontaktbereich eindringenden und bis zu einer in dem Kontaktbereich angeordneten Dichtung vordringenden Feuchtigkeit möglichst weit reduziert wird. Dies soll durch ein gezieltes Sammeln und Abführen dieser Feuchtigkeit erfolgen.

Demnach ist bei einem gattungsgemäßen Lenksystem für ein Kraftfahrzeug, das zumindest ein Lenkgestänge, einen Lenkantrieb, ein eine Antriebsbewegung des Lenkantriebs auf das Lenkgestänge übertragendes Getriebe und ein das Lenkgestänge, den Lenkantrieb und/oder das Getriebe zumindest teilweise umgebendes, mehrteiliges Gehäuse umfasst, erfindungsgemäß dadurch gekennzeichnet, dass in (zumindest) einer von einem Gehäuseteil ausgebildeten Kontaktfläche, die (in zumindest einem Abschnitt) an einer Gegenkontaktfläche eines anderen Gehäuseteils anliegt, (mindestens) eine Drainagenut ausgebildet ist. Die Drainagenut dient dazu, in den zwischen der Kontaktfläche und der Gegenkontaktfläche ausgebildeten Kontaktbereich eindringende Flüssigkeit und gegebenenfalls in der Flüssigkeit gelöst oder ungelöst enthaltene Schmutzpartikel, wie beispielsweise Staub, zu sammeln und abzuführen.

Der Lenkantrieb ist vorzugsweise elektromotorisch ausgebildet, kann jedoch auch auf einem Hydraulikmotor beruhen.

Zum Abführen der Flüssigkeit kann vorzugsweise vorgesehen sein, dass die Drainagenut mit der Umgebung des Gehäuses in fluidleitender Verbindung steht. Die mittels der Drainagenut gesammelte Flüssigkeit kann somit zur Außenseite des Gehäuses abgeführt werden. Alternativ besteht jedoch auch die Möglichkeit, die Flüssigkeit mittels der Drainagenut in ein beliebiges, beispielsweise von dem Gehäuse ausgebildetes Reservoir abzuführen. In diesem Reservoir kann die Flüssigkeit dann dauerhaft oder temporär gespeichert werden.

In einer bevorzugten Ausgestaltung des erfindungsgemäßen Lenksystems kann vorgesehen sein, dass die Drainagenut ringförmig ausgebildet ist. Dadurch kann in einfacher Weise erreicht werden, dass vollumfänglich in den Kontaktbereich eintretende Flüssigkeit gesammelt und über eine einzige Verbindungsleitung zu der Umgebung oder einem Reservoir abgeführt werden kann. Besonders bevorzugt kann dabei zudem vorgesehen sein, dass die Drainagenut eine Gehäuseöffnung (des Gehäuseinnenraums) ringförmig umgibt.

In einer weiterhin bevorzugten Ausgestaltung des erfindungsgemäßen Lenksystems kann vorgesehen sein, dass die Drainagenut zusätzlich zu einer den Kontaktbereich abdichtenden Dichtung mit mindestens einem dazu eingesetzten Dichtelement eingesetzt wird. Da mittels der Drainagenut vorzugsweise die Menge der Flüssigkeit, mit der die Dichtung beaufschlagt wird, reduziert werden soll, um insgesamt die Dichtwirkung im Kontaktbereich zu verbessern, ist daher vorzugsweise vorgesehen, dass die Drainagenut zwischen der Außenseite des Gehäuses und der zwischen der Kontaktfläche und der Gegenkontaktfläche ausgebildeten Dichtung angeordnet ist. Dabei kann das die Dichtung ausbildende Dichtelement beliebig ausgebildet sein. Beispielsweise kann ein herkömmlicher Dichtring, beispielsweise ein O-Ring, eingesetzt werden, der zwischen der Kontaktfläche und der Gegenkontaktfläche deformiert gehalten ist. Dabei kann dieser Dichtring auch in einer radial oder axial ausgerichteten Nut angeordnet sein. Andere Arten von Dichtungen, wie beispielsweise Labyrinthdichtungen, können ebenfalls zum Einsatz kommen.

In einer weiterhin bevorzugten Ausgestaltung des erfindungsgemäßen Lenksystems kann vorgesehen sein, dass das Gehäuse einen den Lenkantrieb umgebenden Antriebsgehäuseteil und ein mit dem Antriebsgehäuseteil verbundenen, das Getriebe umgebenden Getriebegehäuseteil umfasst, wobei die Drainagenut in einer der Verbindung zwischen dem Antriebsgehäuseteil und dem Getriebegehäuseteil dienenden Kontaktfläche angeordnet ist. Dies kann insbesondere vorteilhaft sein, weil es sich bei dem Antriebsgehäuseteil und dem damit verbundenen Getriebegehäuseteil um exponierte Teile des Lenksystems handeln kann, die im Betrieb des Kraftfahrzeugs in erheblichem Maße korrosiver Verschmutzung ausgesetzt sein können.

Das die Drainagenut ausbildende Gehäuseteil und insbesondere alle Gehäuseteile des Lenksystems können vorzugsweise aus einem Metall (insbesondere einem Leichtmetall) und/oder aus Kunststoff ausgebildet sein. Eine einfache und kostengünstige Möglichkeit zur Herstellung der Gehäuseteile kann durch Urformen erfolgen, wobei insbesondere ein Druckgießen aus beispielsweise einer Aluminiumlegierung oder ein Spritzgießen aus einem oder mehreren Kunststoffen vorteilhaft sein kann. Sofern das die Drainagenut ausbildende Gehäuseteil durch Urformen hergestellt wird, kann vorzugsweise dabei auch direkt durch entsprechende Formgebung der genutzten Form die Drainagenut ausgebildet werden. In diesem Fall wäre das erfindungsgemäße Vorsehen einer Drainagenut nicht mit einem (relevanten) zusätzlichen Herstellungsaufwand verbunden.

Es besteht jedoch auch die Möglichkeit, die Drainagenut spanend, beispielsweise durch Fräsen oder Drehen, in das entsprechende Gehäuseteil einzubringen, wobei das Gehäuseteil auch durch Urformen hergestellt worden sein kann. Dies kann vorteilhaft und insbesondere mit einem nur geringen Zusatzaufwand realisiert werden, wenn vorgesehen ist, auch die Kontaktfläche, in die die Drainagenut eingebracht werden soll, spannend zu bearbeiten beziehungsweise nachzubearbeiten.

Ein Abführen der in der Drainagenut gesammelten Flüssigkeit erfolgt vorzugsweise ausschließlich mittels der auf die Flüssigkeit wirkenden Schwerkraft. Vorzugsweise ist daher vorgesehen, dass ein Verbindungsabschnitt, der die Drainagenut mit der Umgebung oder einem Reservoir fluidleitend verbindet, fallend (bezogen auf die Schwerkraftrichtung) ausgerichtet ist. Dabei bezieht sich diese Ausrichtung auf die Anordnung des Lenksystems in einem waagerecht stehenden Kraftfahrzeug.

Die Erfindung wird nachfolgend anhand eines in den Zeichnungen dargestellten Ausführungsbeispiels näher erläutert. In den Zeichnungen zeigt:
- Fig. 1:: ein erfindungsgemäßes Lenksystem in einer vereinfachten Darstellung; und
- Fig. 2:: Die in der Fig. 1 mit II - II gekennzeichnete Seite eines Abschnitts eines Getriebegehäuseteils des Lenksystems.

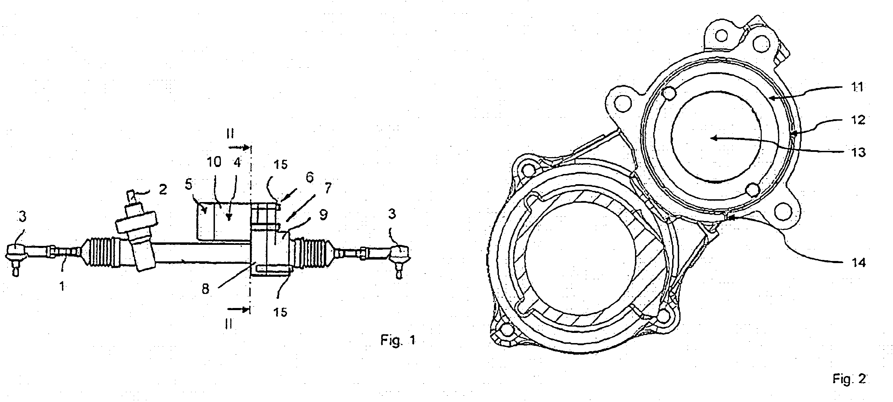

Das in der Fig. 1 dargestellte Lenksystem stellt ein elektrisches Hilfskraftlenksystem für beispielsweise einen im Übrigen nicht dargestellten Personenkraftwagen dar. Dieses umfasst ein Lenkgestänge 1, das in einem Abschnitt als Zahnstange mit einer Spiralverzahnung ausgebildet sein kann. Mit dem Lenkgestänge 1 kämmt ein (nicht sichtbares) Lenkritzel, das drehfest mit einer Lenkspindel 2 verbunden ist. Die Lenkspindel 2 wiederum dient der drehfesten Verbindung mit einer nicht dargestellten Lenksäule und dem damit verbundenen Lenkrad des Personenkraftwagens. An beiden Enden des Lenkgestänges 1 sind Spurstangenköpfe 3 angeordnet, die zur Verbindung mit Radlenkhebeln (nicht dargestellt) vorgesehen sind. Mittels der Radlenkhebel wird eine längsaxiale Translation des Lenkgestänges 1 in eine Schwenkbewegung der gelenkten Räder des Personenkraftwagens übersetzt.

Das Lenksystem umfasst weiterhin noch einen auf einem Elektromotor basierenden Lenkantrieb 4. In Abhängigkeit von dem Lenkmoment, das ein Fahrer des Personenkraftwagens auf das Lenkrad und somit das Lenkgestänge ausübt, erzeugt der Elektromotor des Lenkantriebs 4, gesteuert von einer Steuereinheit 5, ein unterstützendes Hilfslenkmoment. Dieses Hilfslenkmoment beziehungsweise die dazu vorgesehene Rotationsbewegung eines Rotors des Elektromotors wird mittels eines Getriebes 6 auf das Lenkgestänge 1 untersetzt.

Die Lenkspindel 2 einschließlich des Lenkritzels, das Lenkgestänge1, das Getriebe 6, der Elektromotor sowie die Steuereinheit 5 umfassen beziehungsweise sind jeweils von einem Gehäuseteil umgeben. Diese Gehäuseteile sind miteinander verbunden und bilden zusammen ein mehrteiliges Gehäuse des Lenksystems aus. Der das Getriebe umgebende Getriebegehäuseteil 7 selbst ist wiederum zweiteilig ausgeführt. Diese zwei Abschnitte 8, 9 des Getriebegehäuseteils 7 sind miteinander sowie mit dem den Elektromotor umgebenden Antriebsgehäuseteil 10 mittels mehrerer Schraubverbindungen 15 verbunden.

Die Fig. 2 zeigt den in der Fig. 1 links dargestellten Abschnitt 8 des zweiteiligen Getriebegehäuseteils 7. Dabei ist die in der Fig. 1 mit II - II bezeichnete Seite dieses Abschnitts 8 des Getriebegehäuseteils 7 gezeigt. Zu erkennen ist, dass in die Kontaktfläche 11, die für einen Kontakt mit einer Gegenkontaktfläche des Antriebsgehäuseteils 10 vorgesehen ist, eine kreisringförmige, in sich geschlossene Drainagenut 12 eingebracht ist. Diese Drainagenut 12 ist konzentrisch zu einer Gehäuseöffnung 13 ausgebildet, die in Überdeckung mit einer entsprechenden Gehäuseöffnung des Antriebsgehäuseteils 10 ist und somit einen Durchgang zwischen diesen beiden Gehäuseteilen ausbildet. Durch diesen Durchgang erstreckt sich eine von dem Rotor des Elektromotors ausgebildete Abtriebswelle des Lenkantriebs 4.

Von der Drainagenut 12 geht ein nutförmiger Verbindungsabschnitt 14 ab, der die Drainagenut 12 mit der Außenseite des Getriebegehäuseteils 7 und somit mit der Umgebung fluidleitend verbindet.

Die Drainagenut 12 dient dazu, Flüssigkeit und andere Verschmutzungen, die von der Außenseite des Gehäuses in den Kontaktbereich, der zwischen der Kontaktfläche 11 und der Gegenkontaktfläche ausgebildet ist, eindringt, zu sammeln. Die Flüssigkeit und in dieser gegebenenfalls enthaltene Schmutzpartikel, wie beispielsweise Staub, koalesziert in der Drainagenut 12 und fließt schwerkraftbedingt in dieser in Richtung des Verbindungsabschnitts 14 und wird dann über den Verbindungsabschnitt 14 zur Außenseite des Gehäuses beziehungsweise an die Umgebung abgeführt. Dazu ist vorgesehen, dass der Verbindungsabschnitt 14 idealerweise an der tiefsten Stelle (bezogen auf die Schwerkraftrichtung) in die Drainagenut 12 mündet und selbst zudem im Wesentlichen in vertikaler und somit in Schwerkraftrichtung ausgerichtet ist. Dabei zeigt die Fig. 2 in etwa die Ausrichtung des Abschnitts 8 des Getriebegehäuseteils 7, den dieser bei in den Personenkraftwagen verbautem Lenksystem aufweist, wenn der Personenkraftwagen auf einem im Wesentlichen waagerechten Untergrund steht.

Zusätzlich zu der Drainagenut 12 kann innenseitig von dieser noch ein (nicht dargestelltes) Dichtelement in dem zwischen der Kontaktfläche 11 und der Gegenkontaktfläche ausgebildeten Kontaktbereich vorgesehen sein. Dieses kann beispielsweise als herkömmlicher O-Ring ausgebildet sein. Dabei kann der O-Ring in einer kreisringförmigen Nut, die beispielsweise in die Gegenkontaktfläche des Antriebsgehäuseteils 10 eingebracht ist, angeordnet sein, um diesen hinsichtlich seiner Lage zu fixieren.

### Bezugszeichenliste

- 1: Lenkgestänge
- 2: Lenkspindel
- 3: Spurstangenkopf
- 4: Lenkantrieb
- 5: Steuereinheit
- 6: Getriebe
- 7: Getriebegehäuseteil
- 8: erster Abschnitt des Getriebegehäuseteils
- 9: zweiter Abschnitt des Getriebegehäuseteils
- 10: Antriebsgehäuseteil
- 11: Kontaktfläche
- 12: Drainagenut
- 13: Gehäuseöffnung
- 14: Verbindungsabschnitt

### Bezugszeichenliste

- 1: Lenkgestänge
- 2: Lenkspindel
- 3: Spurstangenkopf
- 4: Lenkantrieb
- 5: Steuereinheit
- 6: Getriebe
- 7: Getriebegehäuseteil
- 8: erster Abschnitt des Getriebegehäuseteils
- 9: zweiter Abschnitt des Getriebegehäuseteils
- 10: Antriebsgehäuseteil
- 11: Kontaktfläche
- 12: Drainagenut
- 13: Gehäuseöffnung
- 14: Verbindungsabschnitt
- 15: Schraubverbindung

## Patentansprüche

1. Lenksystem für ein Kraftfahrzeug mit einem Lenkgestänge (1), einem Lenkantrieb (4), einem eine Antriebsbewegung des Lenkantriebs (4) auf das Lenkgestänge (1) übertragenden Getriebe (6) und einem das Lenkgestänge (1), den Lenkantrieb (4) und/oder das Getriebe (6) zumindest teilweise umgebenden, mehrteiligen Gehäuse, **dadurch gekennzeichnet, dass** in einer von einem ersten Gehäuseteil ausgebildeten Kontaktfläche (11), die an einer Gegenkontaktfläche eines zweiten Gehäuseteils anliegt, eine Drainagenut (12) ausgebildet ist.

2. Lenksystem gemäß Anspruch 1, **dadurch gekennzeichnet, dass** die Drainagenut (12) mit der Umgebung des Gehäuses in fluidleitender Verbindung steht.

3. Lenksystem gemäß Anspruch 1 oder 2, **dadurch gekennzeichnet, dass** die Drainagenut (12) ringförmig ausgebildet ist.

4. Lenksystem gemäß Anspruch 3, **dadurch gekennzeichnet, dass** die Drainagenut (12) eine Gehäuseöffnung (13) ringförmig umgibt.

5. Lenksystem gemäß einem der vorhergehenden Ansprüche, **dadurch gekennzeichnet, dass** die Drainagenut (12) zwischen der Außenseite des Gehäuses und einem zwischen der Kontaktfläche (11) und der Gegenkontaktfläche angeordneten Dichtelement angeordnet ist.

6. Lenksystem gemäß einem der vorhergehenden Ansprüche, **dadurch gekennzeichnet, dass** das Gehäuse einen den Lenkantrieb (4) umgebenden Antriebsgehäuseteil (10) und einen mit dem Antriebsgehäuseteil (10) verbundenen, das Getriebe umgebenden Getriebegehäuseteil (7) umfasst, wobei die Drainagenut (12) in einer die Verbindung zwischen dem Antriebsgehäuseteil (10) und dem Getriebegehäuseteil (7) herstellenden Kontaktfläche (11) angeordnet ist.

7. Verfahren zur Herstellung eines Lenksystems gemäß einem der vorhergehenden Ansprüche, **dadurch gekennzeichnet, dass** der die Drainagenut (12) aufweisende Gehäuseteil einschließlich der Drainagenut (12) durch Urformen ausgebildet wird.

8. Verfahren zur Herstellung eines Lenksystems gemäß einem der Ansprüche 1 bis 6, **dadurch gekennzeichnet, dass** die Drainagenut (12) spanend in das entsprechende Gehäuseteil eingebracht wird.

9. Kraftfahrzeug mit einem Lenksystem gemäß Anspruch 2 oder einem der von Anspruch 2 abhängigen Ansprüche, **dadurch gekennzeichnet, dass** ein die Drainagenut (12) mit der Umgebung verbindender, fluidleitender Verbindungsabschnitt (14) bei waagerecht stehendem Kraftfahrzeug von der Drainagenut (12) ausgehend in Richtung der Umgebung fallend ausgerichtet ist.

## Claims

1. Steering system for a motor vehicle having a steering linkage (1), a steering drive (4), a mechanism (6) which transmits a drive movement of the steering drive (4) to the steering linkage (1), and a multiple-piece housing which surrounds the steering linkage (1), the steering drive (4) and/or the mechanism (6) at least partially, **characterized in that** a drainage groove (12) is configured in a contact face (11) which is configured by a first housing part and bears against a counter-contact face of a second housing part.

2. Steering system according to Claim 1, **characterized in that** the drainage groove (12) is fluidically conductively connected to the surroundings of the housing.

3. Steering system according to Claim 1 or 2, **characterized in that** the drainage groove (12) is of annular configuration.

4. Steering system according to Claim 3, **characterized in that** the drainage groove (12) surrounds a housing opening (13) annularly.

5. Steering system according to one of the preceding claims, **characterized in that** the drainage groove (12) is arranged between the outer side of the housing and a sealing element which is arranged between the contact face (11) and the counter-contact face.

6. Steering system according to one of the preceding claims, **characterized in that** the housing comprises a drive housing part (10) which surrounds the steering drive (4) and a mechanism housing part (7) which surrounds the mechanism and is connected to the drive housing part (10), the drainage groove (12) being arranged in a contact face (11) which establishes the connection between the drive housing part (10) and the mechanism housing part (7).

7. Method for producing a steering system according to one of the preceding claims, **characterized in that** the housing part which has the drainage groove (12) is configured, including the drainage groove (12), by way of primary forming.

8. Method for producing a steering system according to one of Claims 1 to 6, **characterized in that** the drainage groove (12) is introduced into the corresponding housing part with the removal of material.

9. Motor vehicle having a steering system according to Claim 2 or one of the claims which are dependent on Claim 2, **characterized in that** a fluid-conducting connecting section (14) which connects the drainage groove (12) to the surroundings is oriented so as to descend in the direction of the surroundings starting from the drainage groove (12), in the case of a horizontally situated motor vehicle.

## Revendications

1. Système de direction pour un véhicule automobile comprenant une tringlerie de direction (1), un entraînement de direction (4), une transmission (6) transmettant un mouvement d'entraînement de l'entraînement de direction (4) à la tringlerie de direction (1) et un boîtier en plusieurs parties entourant au moins en partie la tringlerie de direction (1), l'entraînement de direction (4) et/ou la transmission (6), **caractérisé en ce qu'**une rainure de drainage (12) est réalisée dans une surface de contact (11) réalisée par une première partie de boîtier, qui s'applique contre une surface de contact opposée d'une deuxième partie de boîtier.

2. Système de direction selon la revendication 1, **caractérisé en ce que** la rainure de drainage (12) est en liaison fluidique avec l'environnement du boîtier.

3. Système de direction selon la revendication 1 ou 2, **caractérisé en ce que** la rainure de drainage (12) est réalisée sous forme annulaire.

4. Système de direction selon la revendication 3, **caractérisé en ce que** la rainure de drainage (12) entoure une ouverture de boîtier (13) sous forme annulaire.

5. Système de direction selon l'une quelconque des revendications précédentes, **caractérisé en ce que** la rainure de drainage (12) est disposée entre le côté extérieur du boîtier et un élément d'étanchéité disposé entre la surface de contact (11) et la surface de contact opposée.

6. Système de direction selon l'une quelconque des revendications précédentes, **caractérisé en ce que** le boîtier comprend une partie de boîtier d'entraînement (10) entourant l'entraînement de direction (4) et une partie de boîtier de transmission (7) connectée à la partie de boîtier d'entraînement (10) et entourant la transmission, la rainure de drainage (12) étant disposée dans une surface de contact (11) établissant la liaison entre la partie de boîtier d'entraînement (10) et la partie de boîtier de transmission (7).

7. Procédé de fabrication d'un système de direction selon l'une quelconque des revendications précédentes, **caractérisé en ce que** la partie de boîtier présentant la rainure de drainage (12) y compris la rainure de drainage (12) est réalisée par formage primaire.

8. Procédé de fabrication d'un système de direction selon l'une quelconque des revendications 1 à 6, **caractérisé en ce que** la rainure de drainage (12) est réalisée dans la partie de boîtier correspondante par usinage par enlèvement de copeaux.

9. Véhicule automobile comprenant un système de direction selon la revendication 2 ou selon l'une quelconque des revendications dépendantes de la revendication 2, **caractérisé en ce qu'**une portion de liaison (14) conduisant les fluides, reliant la rainure de drainage (12) à l'environnement, est orientée depuis la rainure de drainage (12) dans la direction de l'environnement en pente descendante lorsque le véhicule automobile est horizontal.
